# EUROPEAN PATENT APPLICATION

(11) **EP 1 715 655 A1**
(43) Date of publication of application: **25.10.2006**
(21) Application number: 05103042.7
(22) Date of filing: 18.04.2005
(51) Int. Cl.: H04L 29/08, H04L 29/06

(54) **System and method for data and message optimisation in wireless communications**

(71) Applicant: Research In Motion Limited, Waterloo, Ontario N2L 3W8 (CA)
(72) Inventor: Bibr, Viera, L0P 1G0, Kilbride, (CA); Fritsch, Brindusa, M9C 2J9, Toronto, (CA); Shenfield, Michael, L4C 3S9, Richmond Hill, (CA)
(74) Representative: Rickard, David John

(57) **Abstract**

Data and message optimization in wireless communications are enabled by a wireless device (56) with a user application (64a) provisioned with an optimized data structure (68a) for storing information associated with a remote service (18a) that utilizes complex data structures (28) for conveying the information to devices that access the remote service. A proxy (40) maps complex service messages (80) to optimized wireless messages (84) in a format of the optimized data structure, and maps optimized wireless messages (72) to complex service messages (76). The proxy is located in a communications path (42,44) between the wireless device and the remote service.

## Description

This application relates generally to wireless communications and wireless communications devices and, in particular, to a method and apparatus for data and message optimization in wireless communications.

The acceptance of wireless devices as a preferred personal communications medium has created a growing demand for such devices. Users of such devices also increasingly expect more functionality and a broader range of services to be made available through such devices. Not only is there a demand for more functionality, there is also a demand for faster response times and more efficient access to remote services.

A major challenge is faced in exposing wireless devices to complex data sources, such as web services, due to the size and complexity of the data structures communicated from such sources. In wired networks and devices where resources and efficiency are not a significant concern, it is permissible to transmit process and store large and complex data structures.

Complex data structures containing many levels of nesting introduce a significant memory overhead on wireless devices. This impacts performance when accessing such data in a memory store.

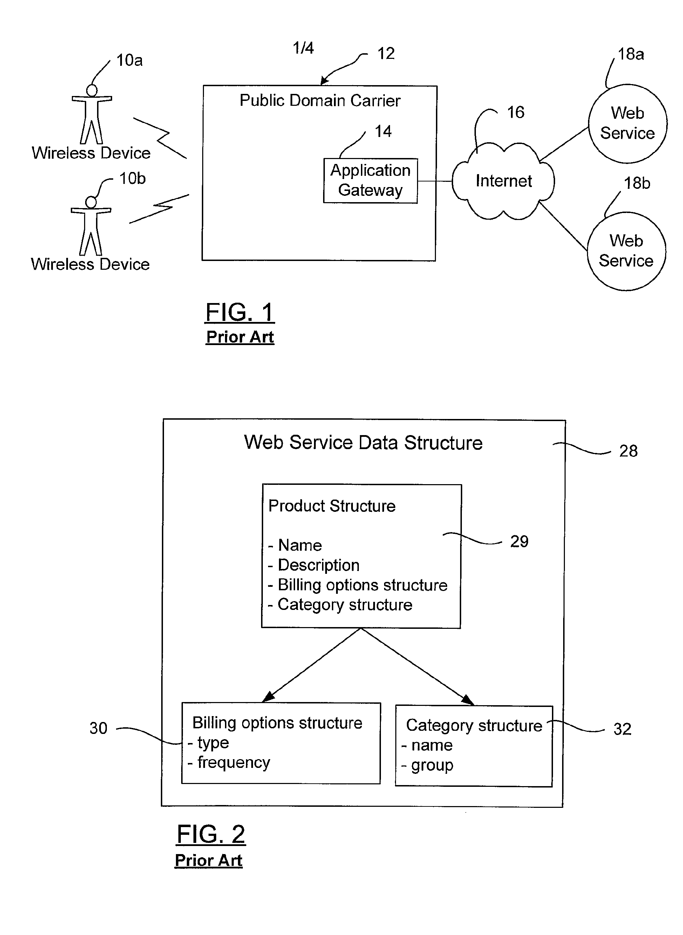

Fig. 1 is a block diagram of a prior art network in which wireless device users 10a, 10b operate wireless devices to send web service request messages via a public domain carrier 12 to an application gateway 14. The application gateway 14 forwards the web service request messages through the internet 16 to an appropriate web service 18a, 18b. The messages are processed by the appropriate web service 18a, 18b and returned through the internet 16 to the application gateway 14. The public domain carrier 12 forwards the response messages to the wireless device 10a, 10b which processes the response and displays response content to the wireless device users 10a, 10b.

FIG. 2 is a block diagram of an exemplary web service data structure 28 in accordance with the prior art. The web service data structure 28 includes a Product Structure 28 that includes data fields and data structures, namely: Name, Description, Billing Options Structure and Category Structure. The Billing Options Structure 30 includes the fields: type and frequency. The Category Structure 32 includes the fields: name and group. As will be appreciated by those skilled in the art, this complex data structure requires significant computing resources to store and retrieve at a rate that is acceptable to most users. Since wireless devices 10a, 10b have limited resources, they generally cannot process complex data structures at a rate that is considered acceptable to most users.

Consequently, there exists a need for a system and method that provides data and message optimization in order to ensure that wireless device response time and wireless messaging efficiency can keep up with demand, and that wireless device users remain satisfied with the performance of their wireless devices.

### SUMMARY

The invention preferably provides a system and method for data and message optimization in wireless devices that provides efficient data storage, efficient data access and retrieval, and transparent, efficient wireless messaging between wireless devices and remote services, such as worldwide web services.

In accordance with a first aspect of the invention, there is preferably provided a system for data and message optimization in wireless communications, comprising: a wireless device with a user application provisioned with an optimized data structure for storing information associated with a remote service that utilizes complex data structures for conveying the information to devices that access the remote service; and a proxy provisioned with data maps for mapping complex service messages to optimized wireless messages in a format of the optimized data structure, and mapping optimized wireless messages to complex service messages, the proxy being located in a communications path between the wireless device and the remote service.

In accordance with another aspect of the invention, there is preferably provided a method for data and message optimization in wireless communication, comprising: provisioning a wireless device user application with an optimized data structure for storing information associated with a remote service that utilizes complex data structures for conveying the information to devices that access the remote service; mapping complex service messages used by the remote service to optimized wireless messages used by the application, and optimized wireless messages to complex service messages; and provisioning a proxy in a communications path between the wireless device and the remote service with the mapping, to permit the proxy to convert the complex service messages to the optimized wireless messages and the optimized wireless messages to the complex service messages, to enable communications between the wireless device and the remote service.

In accordance with yet a further aspect of the invention, there is preferably provided a wireless device, comprising: a user application for providing a user of the wireless device with wireless access to a remote service; and an optimized data structure used by the application for storing and communicating information required by the application to provide the service to a user of the wireless device, the optimized data structure being a flattened representation of a data structure utilized by the remote service to communicate with devices that access the service.

### BRIEF DESCRIPTION OF THE DRAWINGS

Further features and advantages of the present invention will become apparent from the following detailed description, taken in combination with the appended drawings, in which:
FIG. 1 is a block diagram of a prior art wireless network system;
FIG. 2 is a block diagram of an exemplary prior art web service data structure;
FIG. 3 is a schematic diagram illustrating a process for creating and enabling a system in accordance with the invention;
FIG. 4 is a block diagram of an exemplary optimized data structure in accordance with the invention derived by flattening the complex data structure shown in Fig. 2;
FIG. 5 is a block diagram of a proxy in accordance with the invention;
FIG. 6 is a block diagram of a wireless device in accordance with the invention; and
FIG. 7 is a high level overview of messaging between a wireless device and a remote service in a system in accordance with the invention.

It will be noted that throughout the appended drawings, like features are identified by like reference numerals.

### DETAILS

The invention provides a system and method for data and message optimization in wireless communications. Wireless devices are provisioned with user applications for accessing remote services, such as World Wide Web services. The user applications are conditioned to use an optimized data structure for storing information associated with a remote service that utilizes complex data structures for conveying the information to devices that access the remote service. A proxy for relaying messages from the wireless device to the remote service is provisioned with data maps for mapping complex service messages to optimized wireless messages in a format of the optimized data structure. The proxy also maps optimized wireless messages to complex service messages. The proxy is located in a communications path between the wireless device and the remote service. In one embodiment of the invention, the proxy is an application gateway at an edge of the wireless network.

### System Overview

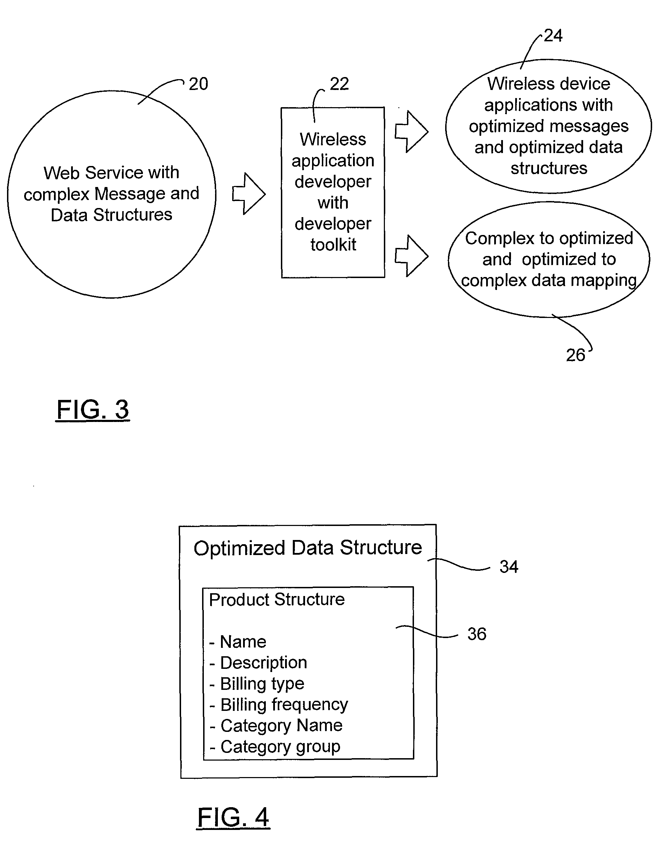

Fig. 3 is a schematic diagram illustrating a process for creating and enabling a system in accordance with the invention.

A remote service accessed by the wireless devices 10a, 10b shown in Fig. 1, such as web service 20 uses complex message structures to communicate information to users who access the remote service. The web service 20 likewise uses complex data structures for data storage and data retrieval. A wireless application developer 22 uses a specification of the web service 20 and an application developer tool kit to create wireless device applications 24 and message maps 26 for enabling a system in accordance with the invention. The wireless device applications 24 with optimized message formats and optimized data structures are created from a specification for the web service 20. As will be explained below with reference to Fig. 4, the optimized data structures are created by "flattening" data structures defined in the web service specification. The process of flattening the web service data structures involves removing any unnecessary structure from the data definitions. The process of flattening may likewise involve removing any data fields that are not required to implement the web service 20 using the wireless application 24. The flattening of the complex data structures can be a manual process performed by the application developer 22, or an automated or semi-automated process performed by toolkit algorithm used by the application developer 22.

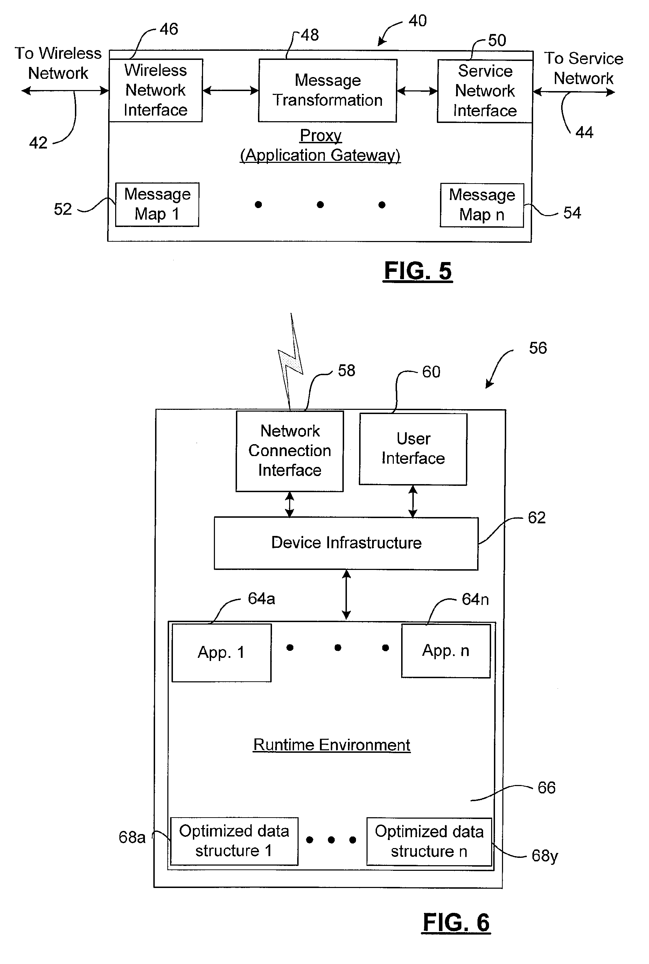

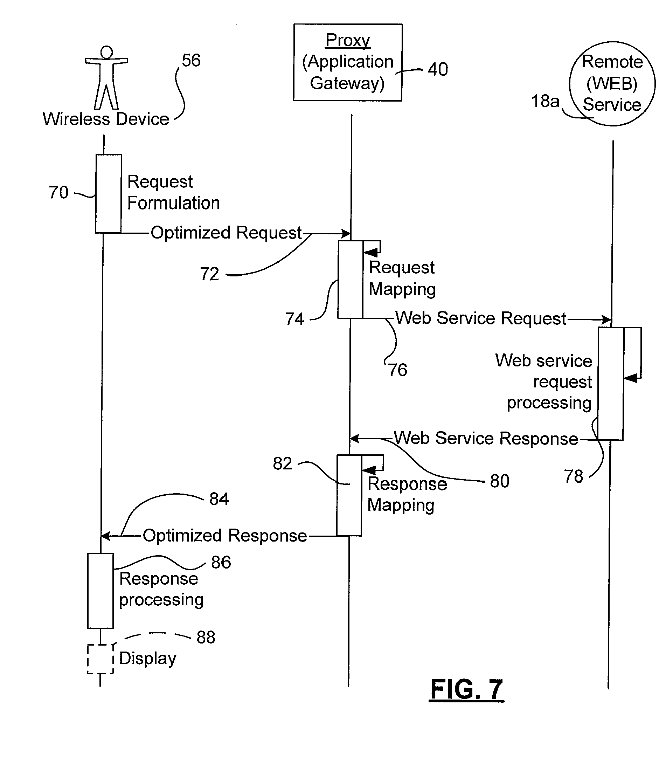

After the optimized data structures and message formats have been created for the wireless device applications 24, message mapping is created for converting complex service messages to optimized wireless messages. The message mapping 26 is used by a proxy at an edge of the wireless network to convert the complex service messages to optimized wireless messages before the optimized wireless messages are sent wirelessly to the wireless device users 10a, 10b. In one embodiment of the invention the proxy that applies the data mapping 26 is an application gateway, as will be explained below with reference to Figs. 5 and 7.

Fig. 4 is a block diagram of an exemplary optimized data structure 34 in accordance with the invention derived by flattening the web service data structure 28 shown in Fig. 2. The optimized data structure 34 is the "flattened" version of the web service data structure 28. The optimized data structure 34 only includes the "products" data structure 36 having fields: name; description; billing type; billing frequency; category name; and, category group. The optimized data structure 34 requires much less memory for storage than the web service data structure 28 shown in Fig. 2. The optimized data structure 28 also requires much less computing resources to store the data in memory and recall the data from memory than the complex data structure 28 shown in Fig. 2. Of course, as will be understood by those skilled in the art, the typical complexity of data structures used for most web service applications is not accurately reflected in these examples, which are simplified for the sake of illustration.

Fig. 5 is a block diagram of proxy 40 in accordance with the invention. The proxy 40 is located in a communications path between the wireless device 10a, 10b and the remote service, for example, a worldwide web service. In one embodiment of the invention the proxy 40 is an application gateway, and is hereinafter referred to as the application gateway 40.

The application gateway 40 supports a wireless network interface 46 having a link 42 to the wireless network. A message transformation function 48 receives messages from the wireless network interface 46 and processes the messages before forwarding the messages to a service network interface 50. The service network interface 50 has a link to a service network 44 (the Internet, for example) over which it forwards the messages to an appropriate web service(s). In accordance with the invention, the application gateway 40 is provisioned with a plurality of message maps 52, 54. The message maps 52, 54 are created by the wireless application developer 22 and used by the message transformation function 48 to process service request and service response messages, as will be explained below in more detail with reference to FIG. 7. One message map 52, 54 is created by the application developer 22 for each message type used by each web service 18a, 18b.

Fig. 6 is a block diagram of a wireless device 56 in accordance with the invention. The wireless device 56 includes a network connection interface 58 that is well known in the art and used to communicate wirelessly with the public domain carrier 12. The wireless device 56 further includes a user interface 60, which may be a keypad, a touch sensitive screen, voice recognition software, or any other user interface for wireless devices. A device infrastructure 62 includes memory, processor(s), peripheral ports, keypad, display and other hardware components required to support the functionality of the wireless device 56. A run time environment 66 supports a plurality of optimized data structures 68a, 68n that store corresponding application data in an optimized data structure, such as the optimized data structure 34 shown in FIG. 4.

### Operation Overview

FIG. 7 provides an overview of optimized wireless messaging in accordance with the invention. In step 70 a wireless device 10a formulates an optimized service request message when a user of the wireless device 10a requests a service from web service 18a. The optimized service request message is forwarded to the application gateway (step 72) which performs service request message mapping in step 74 to transform the optimized service request message into a web service request message format required by the web service 18a. The application gateway 40 forwards the web service request message to the web service 18a (step 76), which receives the web service request message and processes the message in a manner well known in the art (step 78). The web service 18a then formulates and returns a web service response message (step 80). The application gateway 40 receives the web service response message, correlates the web service response message with the web service request message sent earlier, and performs web service response message mapping in step 82 to transform the web service response message to an optimized response message format used by the wireless device 10a. The application gateway 40 forwards the optimized response message to the wireless device 10a in step 84. The wireless device 10a receives the optimized service response message and performs service response message processing in step 86. As required, the service response message generates a display of information to the user in step 88.

As will be appreciated by those skilled in the art, the invention improves wireless device performance by reducing data processing overheads, and reduces storage space requirements on the wireless devices 10a, 10b by eliminating space-consuming complex data structures. The present invention also reduces bandwidth usage in the wireless leg of messaging required for accessing remote services, such as worldwide web services, while transparently delivering messages to the remote services in a native format that includes the complex data structures expected by the remote services.

Although the invention has been explained with explicit reference to web services, those skilled in the art will appreciate that it can be used to efficiently access any remote service that uses complex data structures for request/response messaging.

The embodiments of the invention described above are intended to be exemplary only. The scope of the invention is therefore intended to be limited solely by the scope of the appended claims.

## Claims

1. A system for data and message optimization in wireless communications, comprising:
a wireless device (56) with a user application (64a) provisioned with an optimized data structure (68a) for storing information associated with a remote service (18a) that utilizes complex data structures (28) for conveying the information to devices that access the remote service; and
a proxy (40) provisioned with data maps (52) for mapping complex service messages to optimized wireless messages in a format of the optimized data structure, and mapping optimized wireless messages to complex service messages, the proxy being located in a communications path (42,44) between the wireless device and the remote service.

2. The system as claimed in claim 1 wherein the optimized data structure (68a) comprises a flattened representation (34) of the complex data structure (28) from which unnecessary data structure components are removed.

3. The system as claimed in claim 1 or claim 2 wherein the proxy (40) comprises an application gateway.

4. The system as claimed in claim 3 wherein the application gateway (40) comprises a wireless network interface (46), a service network interface (50) and a message transformation function (48) for applying the mapping.

5. The system as claimed in claim 4 wherein the application gateway (40) further comprises a data map (52,54) for each message type utilized by the remote service (18a).

6. The system as claimed in any one of claims 1 to 5 wherein the optimized wireless messages comprise optimized request messages sent to the remote service (18a) via the proxy (40), and optimized response messages received from the remote service via the proxy.

7. The system as claimed in claim 6 wherein the complex service messages comprise optimized request messages mapped to service request messages by the proxy (40) and forwarded to the remote service (18a), and service response messages returned from the remote service and mapped to the optimized response messages by the proxy (40) before they are forwarded to the wireless device (56).

8. The system as claimed in any one of claims 1 to 7 wherein the wireless device (56) comprises a plurality of user applications (64a,64n), each user application being configured to access a different remote service (18a,18b).

9. The system as claimed in claim 8 wherein the wireless device (56) further comprises an optimized data structure (68a,68y) for each of the user applications (64a,64n).

10. A method for data and message optimization in wireless communication, comprising:
provisioning a wireless device (56) user application (64a) with an optimized data structure (68a) for storing information associated with a remote service (18a) that utilizes complex data structures (28) for conveying the information to devices that access the remote service;
mapping complex service messages used by the remote service to optimized wireless messages used by the application, and mapping optimized wireless messages to complex service messages; and
provisioning a proxy (40) in a communications path (42,44) between the wireless device and the remote service with data maps (52,54), to permit the proxy to convert the complex service messages to the optimized wireless messages and the optimized wireless messages to the complex service messages, to enable communications between the wireless device and the remote service.

11. The method as claimed in claim 10 wherein provisioning the wireless device application (64a) comprises creating an optimized data structure (68a) that includes only data fields required to provide the service to the user of the wireless device.

12. The method as claimed in claim 10 or claim 11 wherein provisioning the proxy (40) comprises provisioning an application gateway to serve as the proxy.

13. The method as claimed in claim 12 wherein provisioning the application gateway (40) further comprises provisioning the application gateway with a message transformation function (48) for applying the data maps.

14. The method as claimed in claim 13 further comprising conditioning the message transformation function (48) to apply the data maps (52,54) to the optimized wireless messages to produce complex service messages that are relayed via a wireline to the remote service (18a), and to apply the mapping to the complex service messages to produce the optimized wireless messages that are relayed wirelessly to the wireless device (56).

15. The method as claimed in any one of claims 10 to 14 further comprising provisioning the wireless device (56) with a plurality of user applications (64a,64n).

16. The method as claimed in claim 15 further comprising provisioning the wireless device (56) with an optimized data structure (68a,68n) for each user application (64a,64n).

17. A wireless device(56), comprising:
a user application (64a) for providing a user of the wireless device with wireless access to a remote service (18a); and
an optimized data structure (68a) used by the application for storing and communicating information required by the application to provide the service to a user of the wireless device, the optimized data structure being a flattened representation of a data structure utilized by the remote service to communicate with devices that access the service.

18. The wireless device (56) as claimed in claim 17, further comprising:
an application (64a,64n) for each type of remote service (18a,18n) access supported by the wireless device; and
and optimized data structure (68a,68n) for each application.

19. The wireless device (56) as claimed in claim 18 wherein each application (64a,64n) that sends a message to a remote service (18a,18n) creates the message in an optimized message format that does not include complex data structures (28).

20. The wireless device (56) as claimed in claim 19 wherein the each application (64a,64n) is conditioned to send messages in the optimized wireless message format to an application gateway (40) that applies data maps (52,54) to each message to convert each message to the complex message format.

21. A machine readable medium comprising program code means which when being executed by a processor of the wireless device (56) of any one of claims 17 to 20 causes said device to perform the method of any one of claims 10 to 16.

## Amended claims

### Amended claims in accordance with Rule 86(2) EPC.

**1.** A system for data and message optimization in wireless communications, comprising:
a wireless device (56) with a user application (64a) provisioned with an optimized data structure (68a) for storing information associated with a remote service (18a) that utilizes complex data structures (28) for conveying the information to devices that access the remote service; and
a proxy (40) provisioned with data maps (52) for mapping complex service messages to optimized wireless messages in a format of the optimized data structure with which the user application is provisioned, and
mapping optimized wireless messages to complex service messages, the proxy being located in a communications path (42,44) between the wireless device and the remote service.

**2.** The system as claimed in claim 1 wherein the optimized data structure (68a) comprises a flattened representation (34) of the complex data structure (28) from which unnecessary data structure components are removed.

**3.** The system as claimed in claim 1 or claim 2 wherein the proxy (40) comprises an application gateway.

**4.** The system as claimed in claim 3 wherein the application gateway (40) comprises a wireless network interface (46), a service network interface (50) and a message transformation function (48) for applying the mapping.

**5.** The system as claimed in claim 4 wherein the application gateway (40) further comprises a data map (52,54) for each message type utilized by the remote service (18a).

**6.** The system as claimed in any one of claims 1 to 5 wherein the optimized wireless messages comprise optimized request messages sent to the remote service (18a) via the proxy (40), and optimized response messages received from the remote service via the proxy.

**7.** The system as claimed in claim 6 wherein the complex service messages comprise optimized request messages mapped to service request messages by the proxy (40) and forwarded to the remote service (18a), and service response messages returned from the remote service and mapped to the optimized response messages by the proxy (40) before they are forwarded to the wireless device (56).

**8.** The system as claimed in any one of claims 1 to 7 wherein the wireless device (56) comprises a plurality of user applications (64a,64n), each user application being configured to access a different remote service (18a,18b).

**9.** The system as claimed in claim 8 wherein the wireless device (56) further comprises an optimized data structure (68a,68y) for each of the user applications (64a,64n).

**10.** A method for data and message optimization in wireless communication, comprising:
provisioning a wireless device (56) user application (64a) with an optimized data structure (68a) for storing information associated with a remote service (18a) that utilizes complex data structures (28) for conveying the information to devices that access the remote service;
mapping complex service messages used by the remote service to optimized wireless messages used by the application, and mapping optimized wireless messages to complex service messages; and
provisioning a proxy (40) in a communications path (42,44) between the wireless device and the remote service with data maps (52,54), to permit the proxy to convert the complex service messages to the optimized wireless messages for use by the application and the optimized wireless messages to the complex service messages, to enable communications between the wireless device and the remote service.

**11.** The method as claimed in claim 10 wherein provisioning the wireless device application (64a) comprises creating an optimized data structure (68a) that includes only data fields required to provide the service to the user of the wireless device.

**12.** The method as claimed in claim 10 or claim 11 wherein provisioning the proxy (40) comprises provisioning an application gateway to serve as the proxy.

**13.** The method as claimed in claim 12 wherein provisioning the application gateway (40) further comprises provisioning the application gateway with a message transformation function (48) for applying the data maps.

**14.** The method as claimed in claim 13 further comprising conditioning the message transformation function (48) to apply the data maps (52,54) to the optimized wireless messages to produce complex service messages that are relayed via a wireline to the remote service (18a), and to apply the mapping to the complex service messages to produce the optimized wireless messages that are relayed wirelessly to the wireless device (56).

**15.** The method as claimed in any one of claims 10 to 14 further comprising provisioning the wireless device (56) with a plurality of user applications (64a,64n).

**16.** The method as claimed in claim 15 further comprising provisioning the wireless device (56) with an optimized data structure (68a,68n) for each user application (64a,64n).

**17.** A wireless device(56), comprising:
a user application (64a) for providing a user of the wireless device with wireless access to a remote service (18a); and
an optimized data structure (68a) used by the application for storing and communicating information required by the application to provide the service to a user of the wireless device, the optimized data structure being a flattened representation of a data structure utilized by the remote service to communicate with devices that access the service.

**18.** The wireless device (56) as claimed in claim 17, further comprising:
an application (64a,64n) for each type of remote service (18a,18n) access supported by the wireless device; and
and optimized data structure (68a,68n) for each application.

**19.** The wireless device (56) as claimed in claim 18 wherein each application (64a,64n) that sends a message to a remote service (18a,18n) creates the message in an optimized message format that does not include complex data structures (28).

**20.** The wireless device (56) as claimed in claim 19 wherein the each application (64a,64n) is conditioned to send messages in the optimized wireless message format to an application gateway (40) that applies data maps (52,54) to each message to convert each message to the complex message format.

**21.** A machine readable medium comprising program code means which when being executed by a processor of the wireless device (56) of any one of claims 17 to 20 causes said device to perform the method of any one of claims 10 to 16.
